# EUROPEAN PATENT APPLICATION

(11) **EP 4 671 515 A2**
(43) Date of publication of application: **31.12.2025**
(21) Application number: 25215913.2
(22) Date of filing: 20.10.2022
(51) Int. Cl.: F02B 75/12

(54) **METHOD OF COMBUSTION AND FUEL INJECTION SYSTEM FOR HYDROGEN GAS**

(30) Priority: 21.10.2021 GB 202115155
(62) Divisional of application: 22805862.4
(71) Applicant: Phinia Delphi Luxembourg Sarl, 4367 Belvaux (LU)
(72) Inventor: WILSON, Neil D., Rochester, ME1 1GE (GB); WILLIAMS, Anthony J., Isleworth, TW7 6LJ (GB); DOBER, Gavin G., 1116 Luxembourg (LU)
(74) Representative: Keltie LLP

(57) **Abstract**

A method of initiating a diffusion combustion process for hydrogen gas in a combustion chamber (20), the combustion chamber (20) including a prechamber (50) having a spark plug (24b) and a primary fuel injector (56), the engine cylinder having a cylinder piston (18) which is driven by means of a crankshaft between bottom dead centre (BDC) and top dead centre (TDC) to perform a compression stroke. The method comprises delivering a pilot injection of primary hydrogen gas directly into the prechamber (50) using the primary fuel injector (56) during a first phase of the compression stroke so that the pilot injection of primary hydrogen gas pre-mixes with the air and forms an ignitable air/hydrogen gas mixture in the vicinity of the spark plug (24b); generating a spark in the prechamber (50) with the spark plug (24b) to ignite the ignitable air/hydrogen gas mixture to generate a pre-mixed primary combustion event which results in a fuel burn and a resultant cloud of primary hydrogen gas (27); and delivering, at a second phase of the compression stroke and at a relatively high pressure, and using a secondary fuel injector (16), a main injection (22) of hydrogen gas directly into the resultant cloud of primary hydrogen gas (27) so that the main injection of primary hydrogen gas ignites in the compression stroke to deliver a secondary combustion event.

## Description

### TECHNICAL FIELD

The present invention relates generally to a method of combustion of hydrogen gas and a fuel system for injecting hydrogen gas into an engine for the purpose of combustion. The invention also relates to a fuel injection system for injecting hydrogen gas.

### BACKGROUND

The ecologic transition dictates a drastic reduction of carbon dioxide emissions in the atmosphere and as a consequence there is an increasing pressure to replace carbon-based fossil fuels with renewable energy. In the automotive industry, this has seen the advent of alternative power-generation means to the traditional internal combustion engine running on fossil fuels. Whilst the electric battery solution has gained considerable momentum as a viable alternative to internal combustion engine technology, it does have limitations especially when considering heavy duty or off-road vehicles where the size and weight of the battery at the current level of technology is impractical.

An alternative comprise is to use the traditional internal combustion engine technology, but to replace the existing carbon-based fossil fuel with ecologically produced hydrogen. Extensive research has shown the feasibility of this solution and medium pressure hydrogen injection systems have been developed successfully. This medium pressure system injects the hydrogen into the cylinder once the cylinder inlet valve has closed and continues injection until the cylinder pressure reaches a pressure limit defined by the injection pressure. This pressure limitation restricts the injection window and dictates a 'pre-mixed' type of combustion strategy initiated by a spark-plug. The combustion strategy is therefore similar to that used in a gasoline-type (Otto-cycle) direct-injection system.

In a conventional diesel engine, the injection of the fuel into the combustion chamber consists of various phases in order to initiate combustion via a 'pilot-injection' while the main injection event develops the 'diffusion-combustion' process. It has been proposed previously to use a dual-fuel approach whereby a diesel 'pilot-injection' pre-empts the injection of hydrogen at medium pressure, However, this does still result in carbon dioxide emissions, reducing the benefits of hydrogen combustion process and potentially removing the all-important 'zero-emission-vehicle' classification.

It is against this background that the invention has been devised.

### SUMMARY OF THE INVENTION

Against this background, the invention provides a method of combusting hydrogen gas in an engine cylinder to initiate a diffusion combustion process, the engine cylinder having a cylinder piston which is driven by means of a crankshaft between bottom dead centre (BDC) and top dead centre (TDC) to perform a compression stroke; the method comprising delivering a pilot injection of hydrogen gas into the combustion chamber during the compression stroke so that the pilot injection of hydrogen pre-mixes with the air and forms an ignitable air/hydrogen gas mixture in the vicinity of an engine cylinder spark plug; generating a spark with a spark plug to ignite the ignitable air/hydrogen gas mixture to generate a primary combustion event which results in a fuel burn and a cloud of primary gas; and delivering a main injection of hydrogen gas directly into the burning cloud of primary gas so that the main injection of hydrogen gas ignites in the compression stroke to deliver a secondary, diffusion combustion event.

No other fuel is used for the combustion process, other than hydrogen gas (i.e. the method relates to a mono-fuel injection system).

The hydrogen gas for both the pilot and the main injection is pressurised to a level in excess of 50 bar. Typically, the pressure range for the hydrogen gas to be injected is between 50 and 300 bar, depending on the engine speed/load requirements. In some circumstances the pressure of hydrogen gas could be as much as 500 bar.

By injecting the hydrogen gas at high injection pressures, the main injection offers efficiency benefits in terms of reduced pumping and thermal losses. Further efficiency gains are achievable by initiating the 'diffusion-combustion' event initiated by the spark plug. Critical to this is the introduction of the hydrogen fuel to the spark plug in sufficient quantities and homogeneity to allow a suitable flame kernel to develop.

In some embodiments, the pilot injection of hydrogen gas may be between 5% and 30% of a stoichiometric mixture strength of air and hydrogen gas which causes all of the air in the combustion chamber to burn.

The method may comprise injecting the pilot injection of hydrogen gas at a crankshaft angle (sometimes referred to as the crank angle) of between 60 degrees and 10 degrees before the cylinder piston (18) is at TDC.

In some embodiments, for the pilot injection and the main injection of hydrogen gas, the cone angle of the hydrogen jet may be less than or equal to 90 degrees (i.e. the jet is relatively focussed).

Typically, up to 90% of the fuel burn of the primary combustion event may occur over a crankshaft angle range of 10°.

The method may comprise generating the spark at a crankshaft angle of at least 10° prior to a crankshaft angle at which the main injection of hydrogen gas is injected.

The method may comprise generating the spark for the main injection at a crankshaft angle of no more than 10° after 90% of the fuel burn of the primary combustion event has occurred.

Typically, the combustion chamber may include a prechamber, the method including generating a spark within the prechamber to ignite the ignitable air/hydrogen gas mixture of the pilot injection.

In one example, the prechamber may be a passive prechamber, the method comprising initiating combustion as a result of the pilot injection of fuel from a main injector into the combustion chamber, and air, being compressed within the prechamber as the cylinder piston moves between BDC and TDC.

The method may comprise igniting, in sequence, the air/hydrogen gas mixture resulting from the pilot injection of hydrogen gas within the prechamber, and then igniting the main injection of hydrogen gas within the combustion chamber.

In one example, the prechamber may be an active prechamber comprising a second prechamber injector, the method comprising injecting the pilot injection of hydrogen gas directly into the prechamber with the second prechamber injector.

The method may comprise injecting the pilot injection of hydrogen gas with the second prechamber injector at a pressure below 50 bar.

The method may comprise injecting the main injection of hydrogen gas from the main injector at a different pressure range from the pilot injection of hydrogen gas from the second prechamber injector.

According to another aspect of the invention there is provided a mono-fuel hydrogen fuel injection system comprising a cylinder and a cylinder piston which is movable within the cylinder by means of a crankshaft between bottom dead centre (BDC) and top dead centre (TDC) to perform a compression stroke; a combustion chamber defined by the cylinder and a cylinder piston; a fuel injector for injecting a pilot injection of hydrogen gas and a main injection of hydrogen gas into the combustion chamber, the pilot injection of hydrogen gas being mixable with air to form a primary ignitable air/hydrogen gas mixture which results in a fuel burn and a cloud of primary gas; and the main injection of hydrogen gas being injectable into the cloud of primary gas to generate a diffusion combustion event, and a spark plug being mounted centrally at a ceiling of the cylinder, wherein the spark plug is configured to generate a spark for igniting the primary ignitable air/hydrogen gas mixture within a central region of the combustion chamber.

The cylinder piston may define a re-entrant piston bowl in an upper surface of the cylinder piston facing a ceiling of the cylinder.

The fuel injection system may include a secondary spark plug mounted at a peripheral edge of the cylinder piston. For example, the secondary spark plug may be mounted in a passive prechamber forming a part of the combustion chamber (the passive prechamber may be at the peripheral edge).

According to another aspect of the invention there is provided a mono-fuel hydrogen fuel injection system comprising a cylinder and a cylinder piston which is movable within the cylinder by means of a crankshaft between bottom dead centre (BDC) and top dead centre (TDC) to perform a compression stroke; a combustion chamber defined by the cylinder and a cylinder piston; a primary fuel injector for injecting a pilot injection of hydrogen gas into a prechamber forming part of the combustion chamber, the pilot injection of hydrogen gas being mixable with air to form a primary ignitable air/hydrogen gas mixture; and a spark plug mounted within the prechamber, wherein the spark plug is configured to generate a spark for igniting the primary ignitable air/hydrogen gas mixture within the prechamber which results in a fuel burn and a cloud of primary gas passing through a wall of the prechamber into the combustion chamber; and a secondary injector for injecting a main injection of hydrogen gas into the cloud of primary gas within the combustion chamber.

In the aforementioned aspects, the surface of the cylinder piston typically may define, together with the ceiling of the cylinder, a squish region radially outward of the piston bowl, and wherein the surface is provided with at least one recess to direct the injected pilot and main injection of hydrogen gas into the piston bowl.

It will be appreciated that preferred and/or optional features of any aspect of the invention may be incorporated alone or in appropriate combination in any of the other aspects of the invention also.

### BRIEF DESCRIPTION OF THE DRAWINGS

So that the invention may be better understood, reference will now be made by way of example only to the following drawings in which:
Figure 1 is schematic drawing of a combustion cylinder in a hydrogen gas fuel system;
Figure 2 is a schematic diagram of the combustion cylinder in Figure 1, with an injector and spark plug arrangement for initiating combustion of hydrogen gas injected into the cylinder;
Figure 3 is a schematic diagram of an injector for use in the combustion cylinder in Figure 1;
Figure 4 is an illustration of a timeline for a method of combustion of hydrogen gas into the combustion cylinder in Figures 1 and 2; and

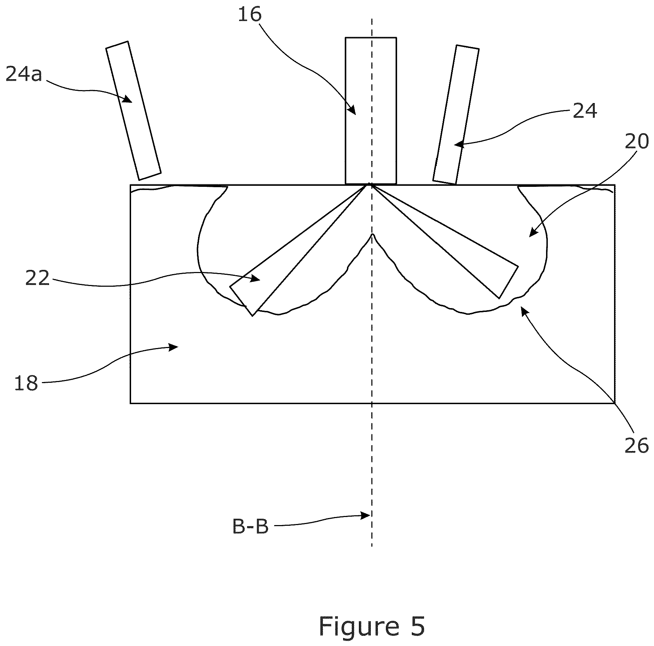

Figures 5 to 7 are schematic diagrams of the combustion chamber in Figure 2, but with an alternative injector and spark plug arrangement to that shown in Figure 2.

### DETAILED DESCRIPTION OF THE EMBODIMENTS

The present invention relates to a mono-fuel hydrogen fuel system for delivering hydrogen gas to a cylinder of an engine. The problem of low thermal efficiency of a medium pressure hydrogen fuel-injection system is solved by the invention as it is capable of injecting higher pressure hydrogen gas into the combustion chamber. This is further enhanced in the invention through the use of injection and ignition strategies to achieve a 'diffusion-type' combustion for the hydrogen gas.

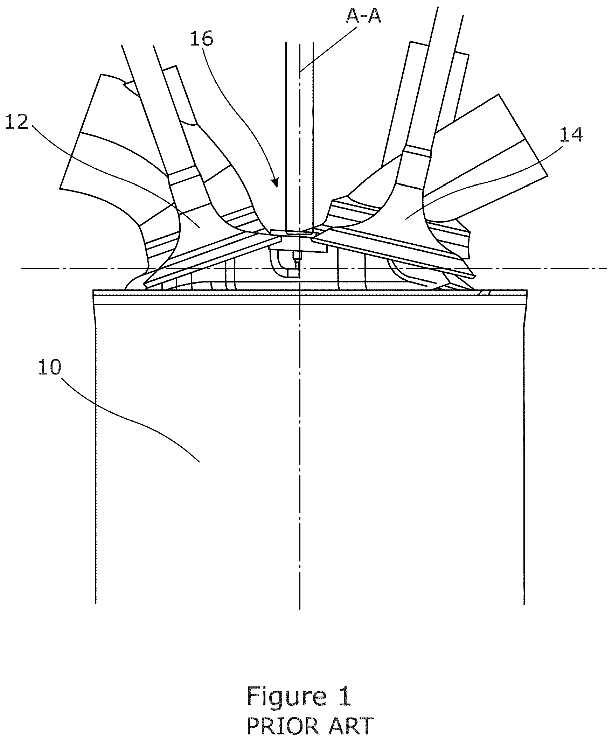

Referring to Figure 1, a combustion cylinder 10 is located within a cylinder head (not shown) and includes at least one air intake valve 12 and at least one exhaust valve 14 (one of each is shown) as in a conventional combustion engine arrangement. An injector 16 is located centrally on top of the cylinder 10 between the intake and exhaust valves 12, 14 and is arranged to receive a supply of pressurised hydrogen gas from a source (not shown) of hydrogen gas. Under the control of the engine control unit (ECU), the injector 16 is arranged to injector hydrogen gas into the engine cylinder 10 in accordance with an injection schedule which will be described in further detail below. The injector has a longitudinal central axis A-A.

A cylinder piston (not shown in Figure 1) is movable within the engine cylinder 10 through a piston cycle between a bottom dead centre (BDC) position and top dead centre (TDC) position by means of a cam drive arrangement (not shown) including a shaft-driven cam. The position of the cylinder piston within the piston cycle is referred to by reference to the crank angle (CA) relative to TDC which occurs at 0° CA. The convention which shall be used when referring to positions of the cylinder piston through the piston cycle is to use a minus sign (-) when referring to a crank angle (CA) between BDC and TDC and to use a plus sign (+) when referring to a crank angle (CA) between TDC and BDC. For example, reference to -10°CA shall be taken to mean a cam angle of 10° before TDC and a reference to +10°CA shall be taken to mean a crank angle of 10° after TDC.

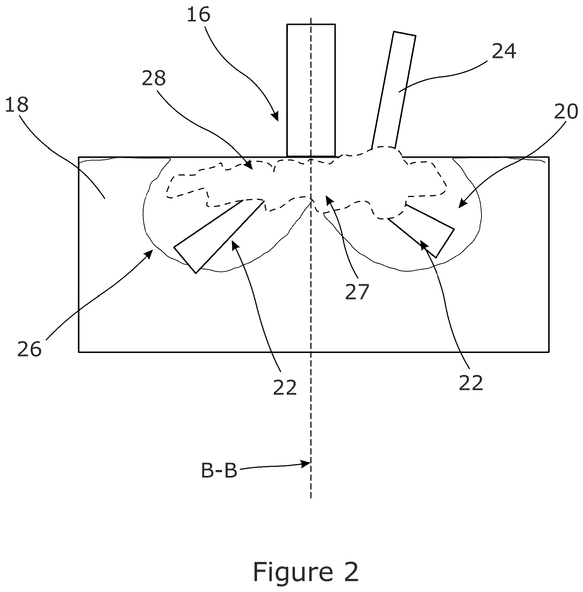

Figure 2 shows the position of the cylinder piston 18 within the cylinder. The cylinder piston 18 has an longitudinal axis B-B which ideally aligns with the injector axis A-A. The upper end of the cylinder piston 18 defines, together with the walls and ceiling of the cylinder, a combustion space 20 into which an injected spray or jet 22 of hydrogen gas is delivered by the injector 16. Adjacent to the injector 16, a spark plug 24 is located in a broadly central position on the ceiling of the cylinder and is arranged to create a spark to ignite the injected hydrogen gas jet 22 within the combustion space 20. The upper end of the cylinder piston 18 is shaped to include a bowl 24 into which the hydrogen gas is injected. The bowl 26 is shown in Figure 2 to be a re-entrant bowl of the type which is familiar for use in diesel engines. The re-entrant bowl 26 includes sides which slant inwards towards a central axis B-B of the piston. In a diesel engine, the re-entrant nature of the piston bowl 26 serves to optimise the air-fuel mixing and the subsequent combustion. In the present invention, the re-entrant bowl may be preferable, but because of the reduced penetration capability of a jet of hydrogen gas compared to a jet of diesel fuel, other piston bowl geometries may be used.

The cylinder is configured for a swirl air charge motion and the compression ratio is typically, although not exclusively, between 16:1 and 22:1. The compression ratio is defined as the ratio between the swept volume of the cylinder piston and the combustion chamber at its minimum volume (TDC).

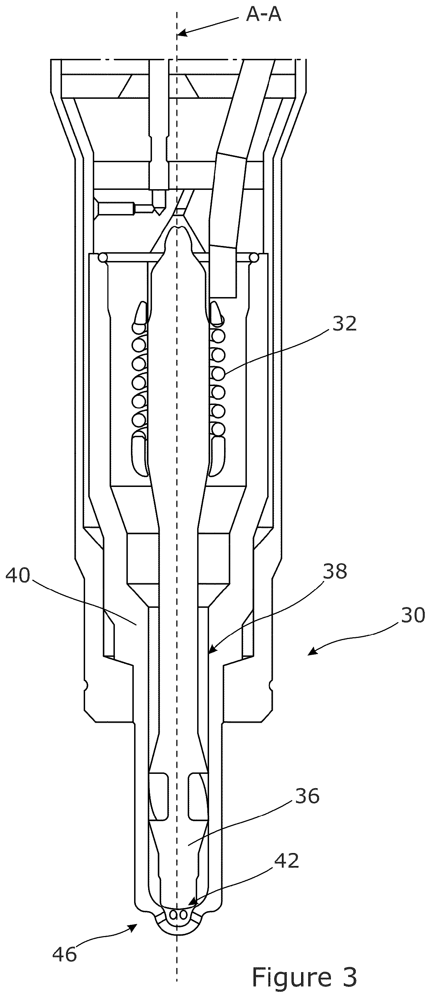

The injector 16 is shown in more detail in Figure 3. The injector 16 includes an injection nozzle 30 which is operable by means of an electromagnetic actuator (not shown) to move between a closed non-injecting state and an open injecting state. The injector 16 has the ability to deliver hydrogen gas to the combustion cylinder at relatively high injection pressures.

The injection nozzle 34 includes an inwardly opening valve needle 36 which is movable within a bore 38 provided in an injection nozzle body 40. The injection nozzle body 40 defines a valve seat 42 and as the valve needle 36 is moved inwardly within the bore 38 under the force of the actuator, and away from the valve seat 42, hydrogen gas delivered to the injector 16 is able to flow past the valve seat 42 for delivery to the combustion space 20.

The injection nozzle 34 is provided with a plurality of openings 46 (four of which are shown) in a tip region of the nozzle body. Various hole configurations are possible to deliver injected sprays at the same or different angles and the inlets to the various holes may be provided in the same or different perpendicular plane relative to the longitudinal axis A-A. Typically, a nozzle 34 may be provided with between 2 and 8 holes for injecting the hydrogen gas spray.

In use, the valve needle 36 moves inwardly within the nozzle bore 38 under the influence of the actuator when it is energised. The actuator is used to operate a servo-valve which controls the force acting on the valve needle 36 and, hence, controls the valve needle movement. As the valve needle 36 moves, the valve seat 42 is opened and hydrogen gas delivered to the injection nozzle 30 is able to flow past the valve seat 42 and into the combustion space 20. This is the injecting or open state of the injector 16. If the actuator is deenergised, the valve needle 36 is returned to seat against the valve seat 42, under a force of a spring 32, so that the delivery of hydrogen gas stops. This is the non-injecting or closed state of the injector 16.

In other embodiments the injector may be a direct-acting injector. Other forms of actuation are also known, including piezoelectric actuators.

Once the hydrogen gas has been injected into the combustion space 20, the elements required to reliably ignite the hydrogen gas into a diffusion flame are (i) the jet shape created by the injector nozzle (identified as 22 in Figure 2), (ii) the shape of the combustion chamber 20 into which the hydrogen is injected, (iii) the air-charge motion within the combustion chamber 20, (iv) the injection timings and (v) quantity of hydrogen injected. In the present invention, the method of combustion means that a 'premixed' combustion hydrogen flame is combined with a 'diffusion' flame' and with the two combustion types merging seamlessly and continuously depending on the engine speed/load conditions.

In a diffusion combustion process, fuel and the oxidizer for fuel (air) come together in a reaction zone of the combustion space 20 through molecular and turbulent diffusion. In this invention, the diffusion flame is caused by a gaseous fuel jet (e.g. hydrogen) and a quiescent or flowing stream of air being brought together in the reaction zone. To achieve the diffusion flame (diffusion combustion), the gaseous fuel must be injected at relatively high pressure. In contrast, in a pre-mixed combustion process, the gaseous fuel and the air are mixed together prior to delivery of a spark (flame) to ignite the mixture. In the invention, the injection method involves first injecting a primary (pilot) quantity of gaseous fuel and developing a pre-mixture of gaseous fuel and air before igniting the pre-mixture with a spark plug, and then injecting a secondary (main) injection into the burning cloud of gas from the pre-mixed combustion which then burns rapidly to combust in a diffusion-type manner.

In order to achieve the required combustion effect, the following injection sequence for hydrogen is followed:
(i) a primary quantity of hydrogen gas is delivered during the compression stroke as the cylinder piston 18 moves from BDC to TDC (this is called the pilot injection);
(ii) the pilot injection is premixed with air in a central region 27 of the combustion space 20 and forms an ignitable mixture in the vicinity of the spark plug 24 in the central region 27 of the combustion space 20;
(iii) the premixed air/fuel combination is ignited with the spark from the spark plug 24;
(iv) the premixed air/fuel combination combusts to create a combustion cloud of gas (this is shown as item 28 in Figure 3);
(v) a secondary or main quantity of hydrogen gas is injected directly into this burning cloud of gas 28 so that the secondary injection ignites very rapidly and reliably (this is referred to as the main injection); and
(vi) the remainder of the combustion event is hence controlled in a 'diffusion' manner.

It is important to balance the quantity of fuel in the pilot injection in order to avoid any risk of auto-ignition of this fuel but, on the other hand, to be sure sufficient fuel is injected such that the main diffusion injection event is reliably ignited. The quantity of hydrogen gas in the pilot injection is typically between 5% and 30% (preferably between 5% and 20%, and more preferably between 5% and 15%) of the stoichiometric mixture strength to burn all the air in the combustion chamber. The stoichiometric mixture is the ideal ratio of air to ignitable fuel that burns all the fuel with no excess air. So, if the stoichiometric mixture is a ratio of 15 parts air to 1 part fuel by mass, the pilot injection of hydrogen gas is typically between 5% and 30% of the 1 part fuel.

The timing of the pilot injection relative to the main injection is also important. Any injection timing of the pilot fuel must be early enough to ensure that there is enough time to form an ignitable mixture in the vicinity of, and at the timing of, the spark event from the spark plug 24 which is delivered to the central region 27 of the combustion space 20. If the pilot injection timing is too early, this may result in over-mixing. In the case of over-mixing, the hydrogen gas could be too lean to burn effectively. If the timing of the pilot injection is too early then the risk of abnormal combustion also increases.

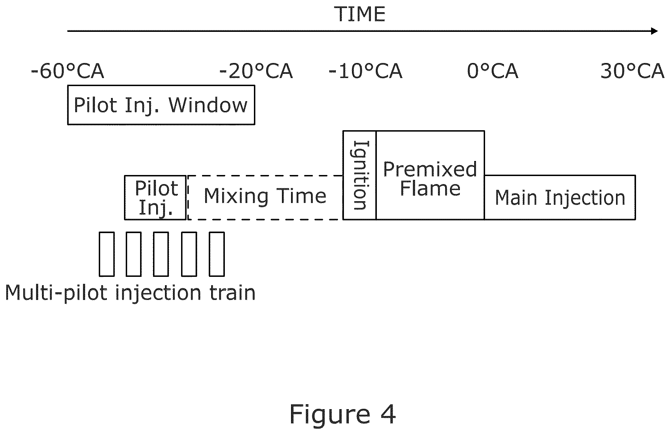

An example of the timing schedule for the pilot and main injection events is shown in Figure 4. Typically, the pilot injection of hydrogen is delivered between -60° and -10°CA and, more preferably, between -50° and -25°CA. A mixing window (mixing of air and the pilot injection of fuel) then occurs between around -25°CA and - 10°CA. The spark plug event occurs around
-10°CA resulting in a premixed flame which lasts until around TDC (at 0°CA). The main injection of hydrogen is then delivered between around TDC and 30° CA as the cylinder piston 18 moves between TDC and BDC. Typically, for example, the main injection timing event will be chosen to achieve a centre of combustion around +10°CA and so as to respect maximum cylinder pressure limits.

The timing of the spark event from the spark plug 24 is chosen such that the pilot fuel is mostly burnt (typically 80-90%) by the time of the start of the main injection event. For example, if the pilot burn duration for 90% of the total pilot fuel burn (often referred to as 90% of the mass fraction burn (MFB)) occurs over a window of 10°CA then the spark must occur at least 10°CA before the start of the main injection, but no more than 10°CA after the pilot fuel has reached 90% of the pilot fuel burn. Burn durations for the pilot fuel are anticipated to be in a window of between 5 and 20°CA, and preferably in a window of 5 and 10°CA. **It** is noted that if the diffusion combustion event occurs too quickly, this will lead to combustion noise.

The main injection event controls the diffusion flame. The quantity of the main injection of fuel may vary from nothing at light loads (pilot injection only may be sufficient) to greater than 80% of the total injected fuel quantity under high load conditions. The main hydrogen injection constitutes the bulk of the energy introduced into the combustion chamber. In order to reach typical engine power targets, the shape of the injected spray 22 for the main injection event needs to lead to rapid and efficient air-fuel mixing.

An additional aspect of the method of combustion is the effect of squish. Squish occurs in the region of the upper surface of the piston bowl 26 when the air/fuel mixture becomes trapped between the ceiling of the engine cylinder 10 and the outer region of the cylinder piston 18 (referred to as the squish region). For swirl applications such as described here, some piston-induced squish may be required to enhance air/fuel mixing for the pilot injection.

Other configurations for the cylinder piston 18 are possible, including pent-roof/tumble type configurations, as opposed to the use of a re-entrant piston bowl. The aforementioned combustion parameters (e.g. pilot and main injection quantities and relative timing) may be maintained for other piston configurations with the air/fuel mixing carried out within the pent-roof of the combustion chamber in combination with a flat upper surface on the cylinder piston.

The mixing objective of the pilot injection is to not over-mix the air and gaseous fuel. As the pilot injections are formed early in the piston cycle, where the cylinder pressure is relatively low, this normally leads to high penetration and high charge homogeneity. Typically, only around 10% of the total amount of hydrogen injected is injected in the pilot injection and so if this is evenly and homogenously mixed throughout the combustion chamber there is a risk that it is too dilute, having a very low flame temperature. **In** such circumstances the pilot injection will not burn. Instead, it is necessary to stratify the mixture such that most of the pilot injection of hydrogen is injected in one general location, ideally centrally located, within the combustion chamber 20. This central location for the pilot injection can then reliably burn and will reliably ignite the main injection event into a diffusion flame.

The potential problems of overmixing can however be mitigated with multiple small 'pilot' injections, as indicated in Figure 4. The multiple pilot injections have a throttling effect on the flow of the hydrogen gas at the needle seat 42, reducing the effective pressure of the injection and therefor reducing the penetration of the pilot hydrogen jet.

Another option is to select the cone angle of the jet to be relatively narrow (e.g. less than 90°) as this would allow the pilot jet of hydrogen to reach and enter the piston bowl, even when the piston is not very close to the TDC position. The injected hydrogen remains in the bowl through the compression stroke but will move to the bottom of the bowl 26 as the piston continues to move so in this case the spark must extend sufficiently into the bottom of the bowl 26 to reach an ignitable mixture.

Alternatively, the injector 16 could deliver a jet of hydrogen gas slightly upstream of the spark plug 24, between the intake valve for air and the spark plug 24. In combination with very late injection (e.g. between 10-20° CA before spark), ignition can be stabilised.

Referring again to Figure 3, it can be seen that the injector 16 is mounted centrally together with a centrally-mounted spark plug 24. This is the optimum arrangement for the injector 16 and the spark plug 24. However, in some engine embodiments only limited space is available to accommodate one of the injector 16 and the spark plug 24 close to the centre of the cylinder, on or very close to the cylinder axis B-B. For a premixed combustion process the spark plug takes priority in the central location, but for a diffusion combustion process the injector must take priority, in both cases to centralise the position of the flame within the combustion chamber. Ideally, however, the spark plug 24 is located close to the injector 16, as in Figure 3, with both located above and within the boundary of the bowl 26 on the cylinder piston 18 and ideally being centrally mounted within the vicinity of the axis B-B.

Other arrangements of the spark plug 24 are also possible. For example, if the spark plug 24 cannot be mounted in the direct vicinity of the piston bowl 26 due to packaging constraints, a peripherally-mounted spark plug 24a only may be used. **If** only a peripherally-mounted configuration of the spark plug 24a is used, the hydrogen gas for the pilot injection event must be directed into the region of the spark event delivered by the spark plug 24a, rather than directing the hydrogen gas centrally into the central region 27 of the combustion space 20. This could be achieved with a specific jet 22 in the direction of the spark plug 24a, either through an adjusted spray cone angle (depending on the extent to which the spark plug 24a is mounted peripherally) or by adjusting the nozzle hole arrangement of the injector 16 to redirect the jet. However, the jet would be influenced by any piston-induced squish, particularly if the injection is very late when the cylinder piston18 is near TDC. On the other hand, if the injection is early then the hydrogen gas is likely to dissipate and an ignitable mixture in the spark region is less likely. Such a situation could be overcome with an increase in the fuel injected in the pilot injection to ensure both ignition and a sufficient amount of high temperature gases are maintained in the piston bowl 26 for the subsequent main diffusion injection event.

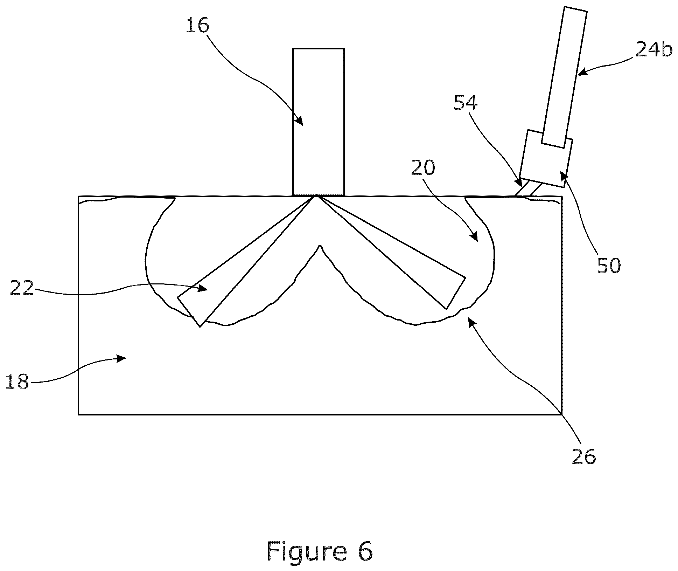

Another option, as shown in Figure 6, is to mount a spark plug 24b in a prechamber 50 located above the cylinder 10. A passive prechamber 50 is a perforated chamber (of between 0.5% and 2% of the main combustion chamber clearance volume) where combustion starts as a result of a pilot injection of fuel from the main injector 16 and air being compressed in the prechamber 50 as the cylinder piston 18 moves through the piston cycle from BDC to TDC. A spark into the prechamber 50 ignites the compressed air/fuel mixture within the prechamber 50 and, as the burning fuel and air expands, one or more holes (represented generally as 54) in the wall of the prechamber wall guide the burning gases into the main combustion space 20, which then ignite the injected fuel from the main injection to create the power stroke for the engine. The spark in the prechamber 50 is therefore configured to ignite in sequence the initial air/hydrogen mixture within the prechamber 50 and then the main ignitable air/hydrogen gas mixture within the combustion chamber 20.

The choice of an appropriate hole(s) geometry in the prechamber 50 allows the guidance of the flame from the peripheral location of the spark plug and prechamber towards a more optimal location into the piston bowl 26 where it can most easily ignite the main diffusion injection event.

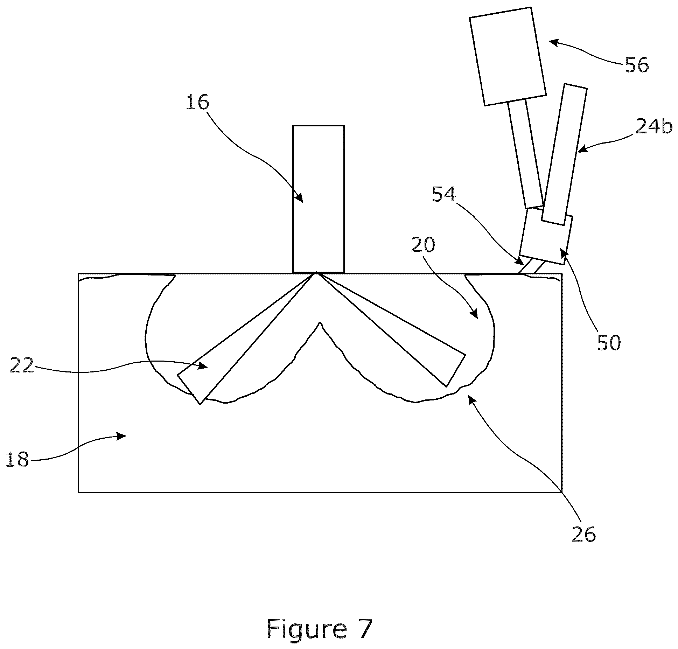

Referring to Figure 7, in other embodiments an active prechamber (having the same location as the passive prechamber 50) may be used in which a second injector 56 (the prechamber injector) is arranged to inject a very small quantity of hydrogen gas directly into the prechamber 50. As the pilot injection of hydrogen gas within the prechamber 50 mixes with the air under compression, the air/fuel mixture combusts, with the resultant flame jet passing through the hole(s) in the prechamber walls and into the main combustion space 20 to ignite the main injection when it is delivered by the injector 16. The second injector 56 does not have to support a diffusion combustion process and so is not constrained to work at the same hydrogen pressure range as for the main injector 16. The second injector 56 may also operate at pressures below 50 bar and preferentially between 30 and 50 bar.

In the active prechamber embodiment, the secondary injector 56 in the prechamber 50 can supply both the hydrogen required to burn the fuel in the prechamber and also either partially of fully the proportion (typically 5 to 15% of stoichiometric fuel quantity) to form the pilot ignitable mixture in the main combustion chamber. The advantage of using the prechamber 50 to form this premixed cloud is that the prechamber hole geometry can be chosen separately from the nozzle geometry for the main injector 16. The prechamber hole geometry can therefore be optimised to form the premixed cloud with the right level of stratification, without compromise of the main diffusion flame burning characteristics.

In an alternative configuration (not shown), the cylinder piston 18 is provided with at least one pocket or recess in its upper surface, in the squish region, which helps to redirect the hydrogen gas into the spark region and also redirect the flame from the spark into the piston bowl 26. It also allows access of a jet from the injector towards the spark plug late in the compression stroke.

In the Figures, similar parts are denoted with like reference numerals even if they are not explicitly described with reference to particular Figure.

It will be appreciated that further embodiments of the invention are envisaged without departing from the scope of the appended claims.

### Clauses

Clause 1. A method of initiating a diffusion combustion process for hydrogen gas in a combustion chamber (20), the engine cylinder having a cylinder piston (18) which is driven by means of a crankshaft between bottom dead centre (BDC) and top dead centre (TDC) to perform a compression stroke; the method comprising;
- delivering a pilot injection of hydrogen gas into the combustion chamber during a first phase of the compression stroke so that the pilot injection of hydrogen gas pre-mixes with the air and forms an ignitable air/hydrogen gas mixture in the vicinity of an engine cylinder spark plug (24; 24a);
- generating a spark with the engine cylinder spark plug (24; 24a) to ignite the ignitable air/hydrogen gas mixture to generate a pre-mixed primary combustion event which results in a fuel burn and a resultant cloud of primary gas (27); and
- delivering, at a second phase of the compression stroke, a main injection (22) of hydrogen gas directly into the resultant cloud of primary gas (27) so that the main injection of hydrogen gas ignites in the compression stroke to deliver a secondary combustion event.

Clause 2. The method of Clause 1, wherein the pilot injection of hydrogen gas is between 5% and 30% of a stoichiometric mixture strength of air and hydrogen gas which causes all of the air in the combustion chamber to burn.

Clause 3. The method as in Clause 1 or Clause 2, comprising injecting the pilot injection of hydrogen gas at a crankshaft angle of between 60 degrees and 10 degrees before the cylinder piston (18) is at TDC.

Clause 4. The method as in any of Clauses 1 to 3, wherein for the pilot injection and the main injection of hydrogen gas the cone angle of the hydrogen jet is less than or equal to 90 degrees.

Clause 5. The method as in any of Clause 1 to 4, wherein up to 90% of the fuel burn of the primary combustion event occurs over a crankshaft angle range of 10°.

Clause 6. The method as claimed in Clause 5, comprising generating the spark at a crankshaft angle of at least 10° prior to a crank angle at which the main injection of hydrogen gas is injected.

Clause 7. The method as claimed in Clause 5 or Clause 6, comprising generating the spark for the main injection at a crankshaft angle of no more than 10° after 90% of the fuel burn of the primary combustion event has occurred.

Clause 8. The method as claimed in any of Clauses 1 to 7, wherein the combustion chamber includes a prechamber (50), the method including generating a spark within the prechamber (50) to ignite the ignitable air/hydrogen gas mixture of the pilot injection.

Clause 9. The method as claimed in Clause 8, wherein the prechamber (50) is a passive prechamber (50), the method comprising initiating combustion as a result of the pilot injection of fuel from a main injector (16) into the combustion chamber (20), and air, being compressed within the prechamber (50) as the cylinder piston (18) moves between BDC and TDC.

Clause 10. The method as claimed in Clause 9, comprising igniting, in sequence, the air/hydrogen gas mixture resulting from the pilot injection of hydrogen gas within the prechamber (50), and then igniting the main injection of hydrogen gas within the combustion chamber (20).

Clause 11. The method as claimed in Clause 8, wherein the prechamber (50) is an active prechamber comprising a second prechamber injector (56), the method comprising injecting the pilot injection of hydrogen gas directly into the prechamber (50) with the second prechamber injector (56).

Clause 12. The method as claimed in Clause 11, comprising injecting the pilot injection of hydrogen gas with the second prechamber injector (56) at a pressure below 50 bar.

Clause 13. The method as claimed in Clause 11 or Clause 12, comprising injecting the main injection of hydrogen gas from the main injector (16) at a different pressure range from the pilot injection of hydrogen gas from the second prechamber injector (56).

Clause 14. A mono-fuel hydrogen fuel injection system comprising:
- a cylinder and a cylinder piston (18) which is movable within the cylinder by means of a crankshaft between bottom dead centre (BDC) and top dead centre (TDC) to perform a compression stroke;
- a combustion chamber defined by the cylinder and a cylinder piston;
- a fuel injector for injecting a pilot injection of hydrogen gas and a main injection of hydrogen gas into the combustion chamber, the pilot injection of hydrogen gas being mixable with air to form a primary ignitable air/hydrogen gas mixture which results in a fuel burn and a cloud of primary gas; and the main injection of hydrogen gas being injectable into the cloud of primary gas to generate a diffusion combustion event, and a spark plug being mounted centrally at a ceiling of the cylinder, wherein the spark plug is configured to generate a spark for igniting the primary ignitable air/hydrogen gas mixture within a central region of the combustion chamber.

Clause 15. The mono-fuel hydrogen fuel injection system as claimed in Clause 14, wherein the cylinder piston defines a re-entrant piston bowl in an upper surface of the cylinder piston facing a ceiling of the cylinder.

Clause 16. The mono-fuel hydrogen fuel injection system as claimed in Clause 14 or Clause 15, comprising a secondary spark plug (24a) mounted at a peripheral edge of the cylinder piston.

Clause 17. The mono-fuel hydrogen fuel injection system as claimed in Clause 15 or Clause 16, comprising a secondary spark plug (24b) mounted in a passive prechamber (50) forming a part of the combustion chamber.

Clause 18. A mono-fuel hydrogen fuel injection system comprising:
- a cylinder and a cylinder piston (18) which is movable within the cylinder by means of a crankshaft between bottom dead centre (BDC) and top dead centre (TDC) to perform a compression stroke;
- a combustion chamber (20) defined by the cylinder and a cylinder piston (18);
- a primary fuel injector (56) for injecting a pilot injection of hydrogen gas into a prechamber (50) forming part of the combustion chamber (20), the pilot injection of hydrogen gas being mixable with air to form a primary ignitable air/hydrogen gas mixture; and
- a spark plug (24b) mounted within the prechamber (50), wherein the spark plug is configured to generate a spark for igniting the primary ignitable air/hydrogen gas mixture within the prechamber (50) which results in a fuel burn and a cloud of primary gas passing through a wall of the prechamber (50) into the combustion chamber (20);
- and a secondary injector (16) for injecting a main injection of hydrogen gas into the cloud of primary gas within the combustion chamber (20).

Clause 19. The mono-fuel hydrogen fuel injection system as in any of Clauses 14 to 18, wherein a surface of the cylinder piston (18) defines, together with the ceiling of the cylinder, a squish region radially outward of the piston bowl, and wherein the surface is provided with at least one recess to direct the injected pilot and main injection of hydrogen gas into the piston bowl.

## Claims

1. A method of initiating a diffusion combustion process for hydrogen gas in a combustion chamber (20), the combustion chamber (20) including a prechamber (50) having a spark plug (24b) and a primary fuel injector (56), the engine cylinder having a cylinder piston (18) which is driven by means of a crankshaft between bottom dead centre (BDC) and top dead centre (TDC) to perform a compression stroke; the method comprising;
- delivering a pilot injection of primary hydrogen gas directly into the prechamber (50) using the primary fuel injector (56) during a first phase of the compression stroke so that the pilot injection of primary hydrogen gas pre-mixes with the air and forms an ignitable air/hydrogen gas mixture in the vicinity of the spark plug (24b);
- generating a spark in the prechamber (50) with the spark plug (24b) to ignite the ignitable air/hydrogen gas mixture to generate a pre-mixed primary combustion event which results in a fuel burn and a resultant cloud of primary hydrogen gas (27); and
- delivering, at a second phase of the compression stroke and at a relatively high pressure, and using a secondary fuel injector (16), a main injection (22) of hydrogen gas directly into the resultant cloud of primary hydrogen gas (27) so that the main injection of primary hydrogen gas ignites in the compression stroke to deliver a secondary combustion event.

2. The method as claimed in claim 1, wherein the pilot injection of hydrogen gas is between 5% and 30% of a stoichiometric mixture strength of air and hydrogen gas which causes all of the air in the combustion chamber to burn.

3. The method as claimed in claim 1 or claim 2, comprising injecting the pilot injection of hydrogen gas at a crankshaft angle of between 60 degrees and 10 degrees before the cylinder piston (18) is at TDC.

4. The method as claimed in any of claims 1 to 3, wherein for the pilot injection and the main injection of hydrogen gas the cone angle of the hydrogen jet is less than or equal to 90 degrees.

5. The method as claimed in any of claims 1 to 4, wherein up to 90% of the fuel burn of the primary combustion event occurs over a crankshaft angle range of 10°.

6. The method as claimed in claim 5, comprising generating the spark at a crankshaft angle of at least 10° prior to a crank angle at which the main injection of hydrogen gas is injected.

7. The method as claimed in claim 5 or claim 6, comprising generating the spark for the main injection at a crankshaft angle of no more than 10° after 90% of the fuel burn of the primary combustion event has occurred.

8. The method as claimed in any of claims 1 to 7, comprising injecting the pilot injection of hydrogen gas with the second prechamber injector (56) at a pressure below 50 bar.

9. The method as claimed in claim 8, comprising injecting the main injection of hydrogen gas from the main injector (16) at a different pressure range from the pilot injection of hydrogen gas from the second prechamber injector (56).

10. A mono-fuel hydrogen fuel injection system comprising:
- a cylinder and a cylinder piston (18) which is movable within the cylinder by means of a crankshaft between bottom dead centre (BDC) and top dead centre (TDC) to perform a compression stroke;
- a combustion chamber (20) defined by the cylinder and a cylinder piston (18);
- a primary fuel injector (56) for injecting a pilot injection of hydrogen gas into a prechamber (50) forming part of the combustion chamber (20), the pilot injection of hydrogen gas being mixable with air to form a primary ignitable air/hydrogen gas mixture; and
- a spark plug (24b) mounted within the prechamber (50), wherein the spark plug is configured to generate a spark for igniting the primary ignitable air/hydrogen gas mixture within the prechamber (50) which results in a fuel burn and a cloud of primary gas passing through a wall of the prechamber (50) into the combustion chamber (20);
- and a secondary fuel injector (16) for injecting a main injection of hydrogen gas at relatively high pressure into the cloud of primary gas within the combustion chamber (20).

11. The mono-fuel hydrogen fuel injection system as claimed in claim 10, wherein a surface of the cylinder piston (18) defines, together with the ceiling of the cylinder, a squish region radially outward of the piston bowl, and wherein the surface is provided with at least one recess to direct the injected pilot and main injection of hydrogen gas into the piston bowl.
